# EUROPEAN PATENT APPLICATION

(11) **EP 2 503 810 A1**
(43) Date of publication of application: **26.09.2012**
(21) Application number: 11002420.5
(22) Date of filing: 23.03.2011
(51) Int. Cl.: H04W 12/12, H04W 64/00

(54) **Method and apparatus for protecting wireless access points against relocation**

(71) Applicant: MIMOON GmbH, 47057 Duisburg (DE)
(72) Inventor: Walther, Peter, Los Gatos CA 95032 (US)
(74) Representative: Eisenführ, Speiser & Partner

(57) **Abstract**

The present invention relates to a method and apparatus for protecting a wireless access point (WAP). Neighbor cells of the WAP are scanned to obtain neighborhood information which can be compared with stored neighborhood information obtained by an earlier scan. If the comparison indicates that at least one predetermined matching criterion is not met, the WAP is set into a locked state. With this solution, WAPs can still be taken away and stolen but they can't be used at a different location.

## Description

### FIELD OF THE INVENTION

The present invention relates to a method, apparatus and computer program product for protecting a wireless access point against theft or unwanted use at a different location.

### BACKGROUND OF THE INVENTION

A wireless access point (WAP) is a device which allows wireless devices (such as mobile phones, smart phones or laptops) to connect to a wired network using Wi-Fi, IEEE 802.11, Bluetooth, Long term Evolution (LTE) or related standards. The WAP usually connects to a router (via a wired network), and can relay data between the wireless devices (such as servers, computers or printers) and wired devices on the network.

A typical corporate use involves attaching several WAPs to a wired network and then providing wireless access to the office local area network (LAN). The WAPs can be managed by a wireless LAN (WLAN) controller which may handle automatic adjustments to radio frequency (RF) power, channels, authentication, and security. The controller(s) can be part of a mobility domain to allow clients access throughout large or regional office locations. Furthermore, a hotspot is a common public application of WAPs, where wireless clients can connect to the Internet without regard for the particular networks to which they have attached for the moment. The concept has become common in large cities, where a combination of coffeehouses, libraries, as well as privately owned open access points, allow clients to stay more or less continuously connected to the Internet, while moving around.

Anti-theft systems and devices used with electronic devices, such as desktop and laptop computers, typically include locks and cables that securely attach the electronic devices to a fixed surface or object. If the cable or lock is broken, an alarm is automatically activated. Other anti-theft devices may employ motion detecting alarms, and vicinity alarms that are automatically activated when the electronic device is moved. A major drawback with such devices or systems is that the secured electronic devices still operate after they are physically removed from the area. Especially for enterprise deployments the owner wants to protect their WAPs against theft, so that - at least - a stolen device should not operate anymore.

Another common approach is to use a built-in global positioning system (GPS) receiver, too. But, GPS would require rather costly implementation which might make sense for very expensive WAPs or WAPs in special (important) locations.

### SUMMARY

It is an object of the present invention to provide improved theft protection for WAPs, which ensures that stolen devices will no longer operate.

This object is achieved by a method as claimed in claim 1, an apparatus as claimed in claim 10, and a computer program product as claimed in claim 15.

Accordingly, neighbor cells of the WAP are scanned to obtain neighborhood information which can be compared with stored neighborhood information obtained by an earlier scan. If the comparison indicates that at least one predetermined matching criterion is not met, the WAP is set into a locked state. Hence, if the WAP will not find the last stored neighbor cells after a power-up it's most likely that the WAP has been reinstalled at a different location as result of theft or illegal move. Then, the WAP can be locked so that only restricted personal of the owner can reset and re-install the WAP. With this solution, WAPs can still be taken away and stolen but they can't be used at a different location. This kind of protection is better than physical protection (fixtures) and/or password protection.

The scanning of neighbor cells may be performed when the WAP is powered up and then possibly at random or regular intervals. It may comprise at least one of an interrogation of cell environment information and an interrogation of received signal strength indication (RSSI).

Furthermore, the stored neighborhood information may be updated based on the obtained neighborhood information. More specifically, the neighborhood information may be stored in a look-up table of a management information base. It may comprise a unique index (e.g. base station indentity code (BSIC)) and predetermined variables for each cell.

In response to a setting of the locked state, the configuration of the WAP may be deleted and the WAP may be deactivated. In a specific example, the at least one matching criterion may comprise that at a first comparison after power-up of the WAP the obtained neighborhood information indicates at least a predetermined number of cell identity codes which are identical to the stored neighborhood information and which have a received signal strength indication in a predetermined comparable range.

The above apparatus may be implemented as a hardware circuit integrated on a single chip or chip set, or wired on a circuit board and provided in a WAP. As an alternative, at least parts of the apparatus may be implemented as a software program or routine controlling a processor or computer device. As an example, the software program or routine may be implemented in C type programming language. Thus, a computer program product may be provided, which comprises code means for producing the steps of method claim 1 when run on a computer device.

Other advantageous modifications are defined in the dependent claims.

### BRIEF DESCRIPTION OF THE DRAWINGS

The invention will now be described in greater detail based on embodiments with reference to the accompanying drawings in which:
Fig. 1 shows a schematic block diagram of a wireless access point according to a first embodiment;
Fig. 2 shows a flow diagram of a theft protection procedure according to a second embodiment; and
Fig. 3 shows a schematic block diagram of software-based implementation according to a third embodiment.

### DESCRIPTION OF THE EMBODIMENTS

In the following, embodiments of the present invention will be described based on an implementation of a WAP in an LTE network

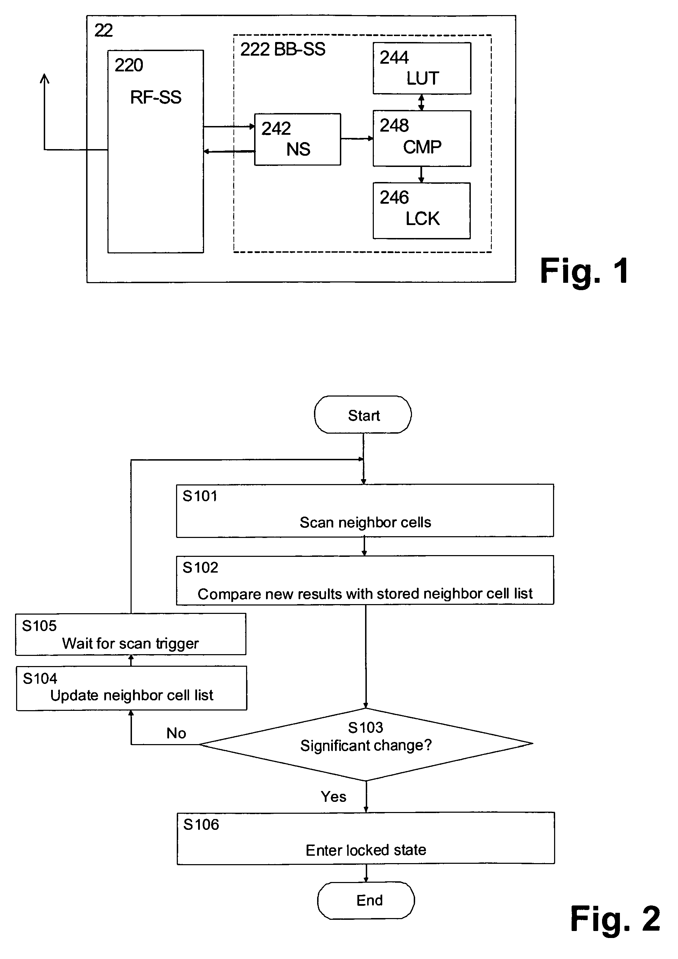

Fig. 1 shows a schematic block diagram of a WAP 22 according to a first embodiment.

The WAP 22 comprises an antenna subsystem which might consist of one or several antennas or antenna elements for achieving a directed or non-directed antenna characteristic. The antenna subsystem is connected to a radio frequency (RF) subsystem (RF-SS) 220 which may include an analog receiver chain (not shown) followed by an analog-to-digital (ADC) converter (not shown) which converts the received signal to the digital domain and outputs a stream of reception data frames to be forwarded to a baseband subsystem (BB-SS) 222 which could be implemented by at least one digital signal processor (DSP). Additionally, the RF subsystem 220 comprises a transmission chain (not shown) which supplies an analog transmission signal received from the baseband subsystem 222 via a digital-to-analog converter (not shown) to the antenna subsystem for wireless transmission.

According to the embodiment, a neighbor cell scanning function or unit 242 is provided, which may be implemented as a part of the baseband subsystem 222. The scanning unit (NS) 242 determines the presence of neighboring cells and their characteristics. The scanning unit 242 may perform or initiate wireless scanning with active or passive techniques. With the active technique, the auditor will effectively be shouting out a message that says "Is a WAP here?" and look for the "Here I am." response from a listening WAP. This technique typically will find many WAPs, but will not find one that has not been configured to respond to this sort of query. Messages are designed to probe any encountered access point for information. With the passive technique, the mere presence of any wireless communication will be identified. This technique will catch any WAP that is in use, but may not find any traffic if no one is using the WAP during the scan. E.g. a list of all WAPs broadcasting beacon signals at the location of the WAP 22 may be obtained. More specifically, the scanning unit 242 may use a backhaul or sniffer functionality which might already been provided in the WAP 22.

In Universal Mobile Telecommunications System (UMTS), High Speed Packet Access (HSPA) and LTE networks, the access point modem may use a specific AT command, e.g. the AT+CCED command, to scan the cell environment and RxLev indication. This command can be used in the present embodiments to retrieve information about the main cell and up to six neighboring cells. This is an extended command that may be used in two different settings:
1. Interrogation of the cell environment information
2. Interrogation of the received signal strength indication (RSSI)

The neighborhood information obtained by the scanning unit 242 is then compared with stored neighborhood information of a previous or earlier scan by a comparing function or unit 248. The stored neighborhood information may be stored in an internal look-up table (LUT) 244 or may be retrieved or requested from an external database. If the comparing unit 248 detects that the obtained neighborhood information differs from the stored neighborhood information by a significant amount determined based on at least one matching criterion, it triggers a lock control function or unit 246 to set the WAP 22 into a locked state. The significant change is determined based on at least one matching criterion.

In a specific implementation, neighbor cells (e.g. 6 neighbors) may be scanned by the scanning unit 242 with first power-up of the WAP 22. The scanning may then be repeated randomly (i.e. at random intervals) or at regular intervals. The scanning result is compared by the comparing unit 248 with the stored neighborhood information from the last scan as retrieved e.g. from the LUT 244. The comparison unit 248 or the lock control unit 246 may be adapted to accept changes in the neighborhood information (e.g. neighbor cell list) during operations (without power down). In such cases, the comparing unit 248 will only update the neighborhood information in the LUT 244.

However, if the comparing unit 248 of the WAP 22 will not find the last stored neighborhood information (e.g. neighbor cell list) in a first comparison after a power-up, it is most likely that the WAP 22 has been reinstalled at a different location as result of theft or illegal move. In this case, the lock control unit 246 may be adapted to delete the configuration of the WAP 22 and to suppress fire-up, i.e., to deactivate operation of the WAP 22. Then, only IT-personal of the owner or other restricted personnel can reset or re-install the WAP 22.

It is noted that the scanning unit 242, the comparing unit 248, the lock control unit 246 may be implemented as discrete signal processing circuits or, alternatively, as threads or software routines.

Fig. 2 shows a flow diagram of a theft protection procedure according to a second embodiment with built-in intelligence, such as self diagnose, for theft protection on WAPs.

After switching on and power-up of the WAP, neighbor cells are scanned in step S101. Tables of the built-in intelligence are filled with neighborhood information of previous scans. As an example, the management information base (MIB) can be used as built-in intelligence. The MIB is a virtual database used for managing the entities in a communications network. The scanning in step S101 may be performed via infra-cell-measurements and will save the collected data of the neighborhood information to its built-in intelligence. The neighborhood dataset may comprise a unique index and certain variables (e.g. RSSI, BSIC, etc.) for each cell. The saved data builds a neighbor cell list including the main cell.

In step S102 the scanning result is compared with the saved datasets of the neighbor cell list. Then, it is checked in step S103 if a significant change has occurred after power-up and after re-scan. It can be assumed assume that the network will change and/or grow over time and will not be static. Over time, some current neighbor cells will disappear due to replacement or repair while others will be added. Therefore the neighbor cells have to be scanned with each cycle and the neighbor cell list needs to be updated with the new measurements, which would be the base for the next scan and compare cycle. Assuming that the WAP is battery backed up to prevent power loss, it would be possible to steal the WAP while still powered-on in battery mode, meaning it would never come to a new power-up. To prevent a theft under these conditions a difference of a well defined number (e.g. 4 out of 6) in the neighbor cells would be not accepted with negative result. The significant change is thus defined based on a predetermined matching criterion. For example, if the new scanning result does not correspond at least to a defined (e.g. three) BSIC with almost the same RSSI (+/- 2 dB) the WAP will be triggered to enter the locked state (S106), as described above in connection with the first embodiment.

Otherwise, if the matching criterion is met and no significant change is determined in step S103, the stored neighbor cell list of the built-in intelligence is updated in step S104 and the procedure waits in step S105 for a scan trigger (obtained e.g. from a timer or random generator or the like) until it jumps back to step S101. After a predetermined or random delay (determined by the scan trigger, e.g. 1 h) the scanning of the neighbor cells in step S101 is repeated again and the new results are compared in step S102 with the saved datasets.

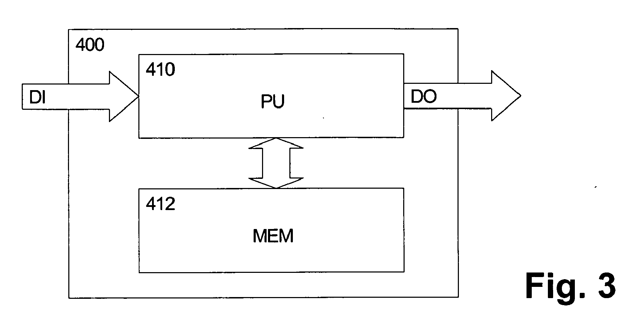

Fig. 3 shows a schematic block diagram of an alternative software-based implementation 400 according to a third embodiment. The required functionalities can be implemented in the baseband subsystem 222 of Fig. 1 with a processing unit 410, which may be any processor or computer device with a control unit which performs control based on software routines of a control program stored in a memory 412. The control program may also be stored separately on a computer-readable medium. Program code instructions are fetched from the memory 412 and are loaded to the control unit of the processing unit 410 in order to perform the processing steps of Fig. 2, which may be implemented as the above mentioned software routines. The processing steps may be performed on the basis of input data DI and may generate output data DO. In case of the WAP, the input data DI may correspond to the scan trigger or the obtained neighborhood information, and the output data DO may correspond to the trigger for entering the locked state.

Consequently, the functionalities of the above embodiments may be implemented as a computer program product comprising code means for generating each individual step of the frame alignment procedure when run on a computer device or data processor of the respective entity.

In summary, a method and apparatus for protecting a wireless access point (WAP) have been described. Neighbor cells of the WAP are scanned to obtain neighborhood information which can be compared with stored neighborhood information obtained by an earlier scan. If the comparison indicates that at least one predetermined matching criterion is not met, the WAP is set into a locked state. With this solution, WAPs can still be taken away and stolen but they can't be used at a different location.

It is apparent that the invention can easily be extended to any wireless access device. The proposed embodiments can be implemented in connection with any wireless access point capable of scanning its radio neighbourhood, particularly for enterprise femto or pico cells. Here, access point/router protection is a real big issue of commercial providers of those devices due to frequent change of people such as walk-ins (e.g. shops, shopping malls, hotels ...), where the access points are visible and mounted against the wall or ceiling. The embodiments may thus vary within the scope of the attached claims.

## Claims

1. A method of protecting a wireless access point (22) against theft or illegal move, said method comprising:
a. scanning (S101) neighbor cells of said wireless access point (22) to obtain neighborhood information about said neighbor cells;
b. comparing (S102) said obtained neighborhood information with stored neighborhood information obtained by an earlier scan;
c. setting (S106) the wireless access point (22) into a locked state if said comparing (S102) indicates that at least one predetermined matching criterion is not met.

2. The method according to claim 1, wherein said scanning (S101) is performed when said wireless access point is powered up.

3. The method according to claim 1 or 2, wherein said scanning (S101) is performed at random or regular intervals.

4. The method according to any one of the preceding claims, further comprising updating (S104) said stored neighborhood information based on said obtained neighborhood information.

5. The method according to any one of the preceding claims, further comprising deleting a configuration of said wireless access point (22) and deactivating said wireless access point (22) in response to a setting of said locked state.

6. The method according to any one of the preceding claims, further comprising storing said neighborhood information in a look-up table (244) of a management information base.

7. The method according to any one of the preceding claims, wherein said scanning (S101) comprises at least one of an interrogation of cell environment information and an interrogation of received signal strength indication.

8. The method according to claim 6, wherein said neighborhood information comprises a unique index and predetermined variables for each cell.

9. The method according to any one of the preceding claims, wherein said at least one matching criterion comprises that at a first comparison after power-up and after re-scan of said wireless access point (22) said obtained neighborhood information indicates at least a predetermined number of cell identity codes which are identical to said stored neighborhood information and which have a received signal strength indication in a predetermined comparable range.

10. An apparatus for protecting a wireless access point (22) against theft or illegal move, said method comprising:
a. a scanning unit (242) for scanning neighbor cells of said wireless access point (22) to obtain neighborhood information about said neighbor cells;
b. a comparing unit (248) for comparing said obtained neighborhood information with stored neighborhood information obtained by an earlier scan; and
c. a lock control unit (246) for setting (S106) said wireless access point (22) into a locked state if said comparing unit (248) indicates that at least one predetermined matching criterion is not met.

11. The apparatus according to claim 10, wherein said lock control unit (246) is adapted to delete a configuration of said wireless access point (22) and to deactivate said wireless access point (22) in response to a setting of said locked state.

12. The apparatus according to claim 10 or 11, wherein said comparing unit (248) is adapted to update said stored neighborhood information based on said obtained neighborhood information.

13. The apparatus according to any one of claims 10 to 12, wherein said at least one matching criterion comprises that at a first comparison after power-up of said wireless access point (22) said obtained neighborhood information indicates at least a predetermined number of cell identity codes which are identical to said stored neighborhood information and which have a received signal strength indication in a predetermined comparable range.

14. A wireless access point comprising an apparatus according to any one of claims 10 to 13.

15. A computer program product comprising code means for producing the steps of method claim 1 when run on a computer device.
